# EUROPÄISCHE PATENTSCHRIFT

(11) **EP 0 908 712 B1**
(45) Veröffentlichungstag und Bekanntmachung des Hinweises auf die Patenterteilung: **29.06.2005**
(21) Anmeldenummer: 98117369.3
(22) Anmeldetag: 14.09.1998
(51) Int. Cl.: G01K 1/14

(54) **Temperaturfühler**
Temperature sensor
Capteur de température

(30) Priorität: 16.09.1997 CH 218197
(43) Veröffentlichungstag der Anmeldung: 14.04.1999
(73) Patentinhaber: Siemens Schweiz AG, 8047 Zürich (CH); Innovative Sensor Technology IST AG, 9630 Wattvil (CH)
(72) Erfinder: Holoubek, Jiri, 9630 Wattwil (CH); Wüest, Josef, 6312 Steinhausen (CH)
(74) Vertreter: Weise, Wolfgang

(56) Entgegenhaltungen:
- CH-A- 403 337
- FR-A- 2 638 522
- US-A- 4 265 117
- PATENT ABSTRACTS OF JAPAN vol. 011, no. 052 (P-548), 18. Februar 1987 -& JP 61 219841 A (MATSUSHITA ELECTRIC IND CO LTD), 30. September 1986
- PATENT ABSTRACTS OF JAPAN vol. 009, no. 170 (P-373), 16. Juli 1985 -& JP 60 047933 A (MATSUSHITA DENKI SANGYO KK), 15. März 1985
- R.A. GAUTHIER: "Surface temperature measurement" ADVANCES IN INSTRUMENTATION., Bd. 35, Nr. 2, 1980, Seiten 513-521, XP002086295 RESEARCH TRIANGLE PARK US

## Beschreibung

Die Erfindung bezieht sich auf einen Temperaturfühler gemäß dem Oberbegriff des Anspruchs 1.

Solche Temperaturfühler eignen sich beispielsweise zur Messung der Temperatur einer in einem abgeschlossenen System zirkulierenden Flüssigkeit, wofür als Beispiel Heizungsanlagen genannt sind.

Grundsätzlich unterscheidet man bei solchen Temperaturfühlern zwei Bauarten, nämlich einerseits Temperaturfühler, die unmittelbar oder mittelbar in die Flüssigkeit eintauchen, und andererseits solche, die als sogenannte Anlegefühler die Temperatur in einem von der Flüssigkeit durchströmten Rohr messen. Bei der erstgenannten Art taucht der Temperaturfühler in das Medium ein, wobei die allenfalls nötige Auswechslung des Temperaturfühler ein wenigstens teilweises Entleeren der Flüssigkeit aus der Anlage erfordert. Bei mittelbar in die Flüssigkeit eintauchenden Temperaturfühlern befindet sich dieser innerhalb eines in die Anlage fest eingebauten Schutzrohres. Damit ist im Fall des Auswechselns des Temperaturfühlers das Entleeren der Anlage nicht nötig, jedoch haben solche Fühler eine größere Trägheit. Bei der zweitgenannten Bauart befindet sich das temperatursensitive Element innerhalb eines Gehäuses, das beispielsweise mittels eines Spannbands am Rohr festgemacht wird.

Ein Temperaturfühler der im Oberbegriff des Anspruchs 1 genannten Art ist aus dem Datenblatt 1 801 QAD22 der Firma Landis & Staefa bekannt. Bei diesem Temperaturfühler ist das Sensorelement eine Wicklung aus Nickeldraht. Diese Wicklung ist von einer mit einem Klebstoff beschichteten Folie umhüllt, um die feinen Drähte der Wicklung zu schützen. Mittels eines federnden Elements wird diese Wicklung gegen ein Koppelglied aus einer gut wärmeleitenden Metallfolie und mit dieser zusammen gegen die Wand des Rohres gedrückt, in dem die zu messende Flüssigkeit zirkuliert.

Ein weiterer Temperaturfühler ist aus FR-A-2 638 522 bekannt.

Aus der US-A-4,265,117 ist ein Gerät zur Temperaturmessung bekannt, dessen Meßsonde in vergleichbarer Weise mit einem elastischen Element verbunden ist, das gegen das zu messende Objekt gedrückt wird. Das elastische Element ermöglicht einen ausreichenden thermischen Kontakt bei Messungen an ebenen oder gewölbten Flächen.

Bei den vorgenannten Temperaturfühlern bestehen grundsätzlich zwei Probleme. Erstens soll der eigentliche Sensor die Temperatur des in der Rohrleitung fließenden Mediums möglichst genau erfassen. Zweitens soll der Wärmeübergang von der Flüssigkeit auf den Sensor sehr schnell erfolgen, so daß der zeitliche Verlauf des Sensorsignals gegenüber dem zeitlichen Verlauf der Temperatur der Flüssigkeit im Rohr möglichst wenig nacheilt. Bekannte Temperaturfühler sind hinsichtlich dieser beiden Forderungen noch nicht optimal.

Der Erfindung liegt die Aufgabe zugrunde, einen Temperaturfühler zu schaffen, dessen Zeitverhalten und dessen Genauigkeit der Temperaturerfassung weiter verbessert ist.

Die genannte Aufgabe wird erfindungsgemäß durch die Merkmale des Anspruchs 1 gelöst. Vorteilhafte Weiterbildungen ergeben sich aus den abhängigen Ansprüchen.

Nachfolgend wird ein Ausführungsbeispiel der Erfindung anhand der Zeichnung näher erläutert.

Es zeigen:
- Fig. 1: ein Schema eines Anlege-Temperaturfühlers und
- Fig. 2: ein Schema eines Sensorelements.

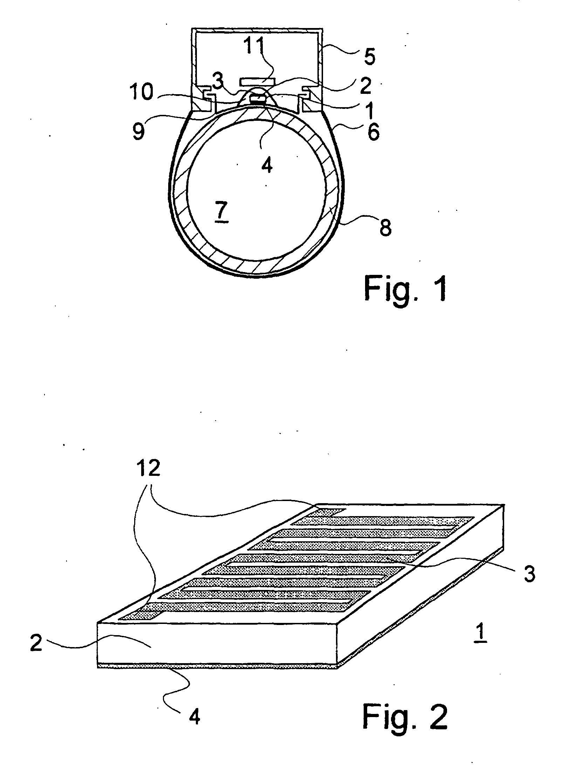

In der Fig. 1 ist mit Bezugszahl 1 ein Sensorelement bezeichnet, das aus einem flachen Träger 2 besteht, der erfindungsgemäß auf seiner ersten Fläche ein Fühlerlement 3 trägt. Der Träger 2 ist vorzugsweise ein Keramiksubstrat. Das Fühlerelement 3 ist vorteilhaft ein Dünnschichtelement, das vorteilhaft nach dem PVD-Verfahren (physical vapor deposition) auf dem Träger 2 aufgebracht ist. Als Material für das Dünnschichtelement sind alle leitenden Werkstoffe geeignet, die einen großen Temperaturkoeffizienten des spezifischen Widerstands ausweisen. Als Beispiel sei hier Nickel genannt. Statt der Anwendung des PVD-Verfahrens sind auch chemische oder elektrophysikalische Abscheideverfahren anwendbar, beispielsweise eine galvanische Abscheidung oder ein CVD-Verfahren (chemical vapor deposition). Die Dicke der abzuscheidenen Schicht beträgt vorteilhaft 0,2 bis 2 µm.

Auf der dem Fühlerelement 3 gegenüber liegenden Fläche des Trägers 2 ist auf diesem eine Schicht 4 einer gut lötbaren Metallegierung aufgebracht. Das Aufbringen dieser dünnen Schicht 4 erfolgt in analoger Weise beispielsweise nach dem vorgenannten PVD-Verfahren. Als Werkstoff kommt vorteilhaft ein dreilagiger Schichtaufbau in Betracht. Die unterste Schicht besteht beispielsweise aus einer NiCr-Legierung, auf der anschließend Nickel und zuletzt Gold abgeschieden wird. Die Dicke der einzelnen Schichten liegt vorteilhaft im Bereich 10 bis 200 nm für die NiCr-Legierung, 50 bis 500 nm für Ni und 50 bis 200 nm für Au. Die Zusammensetzung der NiCr-Legierung liegt vorteilhaft im Bereich 10 % Nickel/90 % Chrom bis 90 % Nickel/10 % Chrom. Typischerweise kommt eine Zusammensetzung mit 50 % Nickel und 50 % Chrom zur Anwendung.

Die Fig. 1 zeigt weiter in schematischer Darstellung einen Teil eines Gehäuses 5, das mit einem Spannband 6 verbunden oder verbindbar ist, womit das Gehäuse 5 an einem von einer Flüssigkeit 7 durchströmten Rohr 8 befestigbar ist. Auf der dem Rohr 8 zugewandten Seite des Gehäuses 5 ist ein Koppelblech 9 angebracht. Dieses Koppelblech 9 ist beispielsweise mit dem Gebäuse 5 unverlierbar verbunden. Das Koppelblech 9 besteht vorteilhaft aus Kupfer oder einer hochkupferhaltigen Legierung, die einerseits gut lötbar und/oder schweißbar, andererseits gut wärmeleitend und darüber hinaus gut elastisch verformbar ist. Im Hinblick auf einen schnellen Temperaturübergang vom Rohr 8 auf das Fühlerelement 3 soll die spezifische Wärme des Materials des Koppelblechs 9 gering sein, ebenso die Dicke.

Auf der dem Rohr 8 abgewandten Seite des Koppelblechs 9 ist das Sensorelement 1 befestigt. Die Befestigung geschieht durch ein thermisches Fügeverfahren, vorteilhaft durch einen Lötvorgang, bei dem die auf dem Träger 2 aufgebrachte Schicht 4 mittels eines Lots mit der Oberfläche des Koppelblechs 9 eine innige Verbindung eingeht. Das Löten erfolgt vorteilhaft in einem Ofen, wobei sich die Temperatur nach dem verwendeten Lot richtet. Alternativ ist auch eine Schweißverbindung möglich. Durch diese Maßnahme wird ein außerordentlich guter Wärmeübergang vom Koppelblech 9 auf das Sensorelement 1 gewährleistet, der zudem über die Lebensdauer des Temperaturfühlers keinen Veränderungen unterworfen ist.

Da Temperaturfühler dieser Art oftmals in feuchten Räumen angeordnet sind, ist es vorteilhaft, das auf dem Koppelblech 9 aufgebrachte Sensorelement 1 mittels eines Kunststoffs abzudecken. In der Fig. 1 ist eine solche das Sensorelement 1 abdeckende Pille 10 gezeigt, die vorteilhaft durch Vergießen des Kunststoffs aufgebracht wird. Auf diese Weise kann Korrosion verhindert werden. Vorteilhaft kann hier ein Silikonharz zur Anwendung kommen.

Die Abdeckung durch die Pille 10 ist weiter vorteilhaft deshalb, weil im Gehäuse 5 ein mit diesem verbundenes Federelement 11 angeordnet ist, mit dessen Hilfe das Koppelblech 9 gegen die Wand des Rohres 8 drückbar ist. Das Federelement 11 kann deshalb auf der Pille 10 aufliegen, ohne daß das von der Pille 11 umschlossene Sensorelement 1 mechanisch überlastet wird. Vorteilhaft wird für die Pille 10 ein Werkstoff mit schlechtem Wärmeleitvermögen gewählt, wodurch erreicht wird, daß der Ableitfehler des Sensorelements 1 gering bleibt.

In der Fig. 2 ist das Sensorelement 1 in vergrößerter Darstellung schematisch gezeigt. Gleiche Bezugszahlen bezeichnen darin gleiche Teile wie in der Fig. 1. Auf dem Träger 2 ist auf der einen Seite das Fühlerelement 3 aufgebracht. Die Fig. 2 zeigt eine mäanderförmige Anordnung. Diese Anordnung ist vorteilhaft, weil bei dieser ein Trimmen auf einen bestimmten Widerstand nach einem der bekannten Verfahren sehr leicht möglich ist. An beiden Enden weist das Fühlerelement 3 vergrößerte Flächen 12 auf, an denen die in der Fig. 2 nicht dargestellten Anschlußdrähte auflötbar sind.

Der Träger 2 hat beispielsweise eine Breite von ca. 2 mm, eine Länge von 5 bis 10 mm und eine Dicke von ca. 0,2 bis 0,7 mm. Durch die geringe Breite bleibt einerseits die mechanische Belastung des Trägers 2 auch dann gering, wenn das Koppelblech 9 (Fig. 1) gegen ein Rohr 8 von relativ geringem Durchmesser gedrückt wird. Die geringen Dimensionen des Sensorelements 1 bringen zudem den Vorteil mit sich, daß die Wärmekapazität gering ist, was sich positiv auf das Zeitverhalten auswirkt.

Auf der dem Fühlerelement 3 gegenüber liegenden Fläche des Trägers 2 ist die Schicht 4 aus der gut löt- bzw. schweißbaren Metallegierung aufgebracht, wie dies zuvor schon beschrieben ist.

Das Koppelblech 9 kann vorteilhaft gewölbt sein, wobei seine Krümmung kleiner als der normalerweise vorkommende Durchmesser des Rohres 8 ist. Unter der Wirkung des Federelements 11 nimmt dann das Koppelblech 9 etwa die Krümmung der Wandung des Rohres 8 an, was eine optimale Ankopplung ergibt.

## Patentansprüche

1. Temperaturfühler mit einem ein Fühlerelement (3) aufweisenden Sensorelement (1), dessen elektrische Eigenschaften eine Abhängigkeit von seiner Temperatur aufweisen, wobei das Sensorelement (1) in einem Gehäuse (5) plaziert ist, welches mittels einer Befestigungsvorrichtung (6) an einem von einer Flüssigkeit durchströmten Rohr (8) befestigbar ist, bei dem das Gehäuse (5) ein federndes Element (11) aufweist, mit dessen Hilfe das Sensorelement (1) gegen ein Koppelblech (9) und mit diesem zusammen gegen die Wand des Rohres (8) drückbar ist, **dadurch gekennzeichnet,**
- **daß** das Fühlerelement (3) des Sensorelements (1) ein Dünnschichtelement ist, das auf einer Seite eines Trägers (2) mittels eines thermischen oder elektrophysikalischen Abscheideverfahrens aufgebracht ist,
- **daß** auf der dem Fühlerelement (3) gegenüber liegenden Seite des Trägers (2) eine Schicht (4) aus einer gut löt- bzw. schweißbare Metallegierung mittels eines thermischen oder elektrophysikalischen Verfahrens aufgebracht ist,
- die mittels eines thermischen Fügeverfahrens wie Löten bzw. Schweißen mit dem Koppelblech (9) fest verbunden ist.

2. Temperaturfühler nach Anspruch 1, **dadurch gekennzeichnet, daß** der Träger (2) ein Keramiksubstrat ist.

3. Temperaturfühler nach Anspruch 2, **dadurch gekennzeichnet, daß** das Dünnschictelement (3) aus einem elektrisch leitenden Werkstoff mit einem großen Temperaturkoeffizienten des spezifischen Widerstands ist.

4. Temperaturfühler nach Anspruch 3, **dadurch gekennzeichnet, daß** der Werkstoff des Fühlerelements (3) Nickel ist.

5. Temperaturfühler nach einem der Ansprüche 2 bis 4, **dadurch gekennzeichnet, daß** die Schicht (4) eine dreilagige Schicht ist, deren untere Teilschicht aus einer NiCr-Legierung, deren mittlere Teilschicht aus Nickel und deren obere Teilschicht aus Gold besteht.

6. Temperaturfühler nach einem der Ansprüche 2 bis 5, **dadurch gekennzeichnet, daß** das mit dem Koppelblech (9) verbundene Sensorelement (1) mittels einer Pille (10) abgedeckt ist.

## Claims

1. Temperature probe having a sensor element (1) which includes a probe element (3) and the electrical properties of which are dependent on its temperature, the sensor element (1) being placed in a housing (5) which can be secured, by means of a securing device (6) to a pipe (8) with a liquid flowing through it, in which temperature probe the housing (5) has a resilient element (11), with the aid of which the sensor element (1) can be pressed onto a metal coupling plate (9) and, with the latter, onto the wall of the pipe (8), **characterized**
- **in that** the probe element (3) of the sensor element (1) is a thin-film element which is applied to one side of a carrier (2) by means of a thermal or electro-physical deposition process,
- **in that** a layer (4) of a metal alloy with good welding or soldering properties is applied to the opposite side of the carrier (2) from the probe element (3) by means of a thermal or electro-physical process,
- and is securely joined to the metal coupling plate (9) by means of a thermal joining process, such as soldering or welding.

2. Temperature probe according to Claim 1, **characterized in that** the carrier (2) is a ceramic substrate.

3. Temperature probe according to Claim 2, **characterized in that** the thin-film element (3) is made from an electrically conductive material with a high temperature coefficient of resistivity.

4. Temperature probe according to Claim 3, **characterized in that** the material of the probe element (3) is nickel.

5. Temperature probe according to one of Claims 2 to 4, **characterized in that** the layer (4) is a layer composed of three sublayers, of which the lower sublayer consists of an NiCr alloy, the middle sublayer consists of nickel and the upper sublayer consists of gold.

6. Temperature probe according to one of Claims 2 to 5, **characterized in that** the sensor element (1) connected to the metal coupling plate (9) is covered by means of a pill (10).

## Revendications

1. Sonde de température avec un élément capteur (1) présentant un élément de sonde (3), dont les propriétés électriques présentent une dépendance vis-à-vis de sa température, l'élément capteur (1) étant placé dans un boîtier (5) qui peut être fixé au moyen d'un dispositif de fixation (6) sur un tuyau (8) traversé par un liquide, tuyau dans lequel le boîtier (5) présente un élément (11) élastique à l'aide duquel l'élément capteur (1) peut être appuyé contre une tôle de couplage (9) et peut être appuyé avec celle-ci contre la paroi du tuyau (8), **caractérisée**
- **en ce que** l'élément de sonde (3) de l'élément capteur (1) est un élément à couche mince qui est appliqué sur un côté d'un support (2) au moyen d'un procédé de déposition thermique ou électrophysique,
- **en ce que**, sur le côté, opposé à l'élément de sonde (3), du support (2) est appliquée une couche (4) à base d'un alliage de métal pouvant être facilement brasé resp. soudé au moyen d'un procédé thermique ou électrophysique,
- lequel alliage est relié de façon fixe à la tôle de couplage (9) au moyen d'un procédé d'assemblage thermique comme le brasage ou le soudage.

2. Sonde de température selon la revendication 1, **caractérisée en ce que** le support (2) est un substrat céramique.

3. Sonde de température selon la revendication 2, **caractérisée en ce que** l'élément à couche mince (3) est à base d'un matériau électroconducteur avec un grand coefficient de température de résistance spécifique.

4. Sonde de température selon la revendication 3, **caractérisée en ce que** le matériau de l'élément de sonde (3) est du nickel.

5. Sonde de température selon l'une quelconque des revendications 2 à 4, **caractérisée en ce que** la couche (4) est une couche à trois niveaux, dont la couche partielle inférieure est à base d'un alliage de NiCr, la couche partielle centrale à base du nickel et la couche partielle supérieure à base d'or.

6. Sonde de température selon l'une quelconque des revendications 2 à 5, **caractérisée en ce que** l'élément capteur (1) relié à la tôle de couplage (9) est recouvert au moyen d'une pastille (10).
